Europäisches Patentamt

European Patent Office

Office européen des brevets

(11) Publication number: **0 271 871**
**A2**

# EUROPEAN PATENT APPLICATION

(21) Application number: **87118562.5**

(22) Date of filing: **15.12.87**

(51) Int. Cl.⁴: **H04N 15/00**

(30) Priority: **15.12.86 CN 108494**

(43) Date of publication of application:
**22.06.88 Bulletin 88/25**

(84) Designated Contracting States:
**DE FR GB**

(71) Applicant: **Zhang, Qing-Liu**
**Mi Le Si Xin Cun 137 Hao**
**Kun Mingshi City Yun Nan Sheng**
**Province(CN)**

(72) Inventor: **Zhang, Qing-Liu**
**Mi Le Si Xin Cun 137 Hao**
**Kun Mingshi City Yun Nan Sheng**
**Province(CN)**

(74) Representative: **Lehmann, Klaus, Dipl.-Ing. et**
**al**
**Patentanwälte Schroeter & Lehmann**
**Postfach 70 17 47 Lipowskystrasse 10**
**D-8000 München 70(DE)**

(54) **Device for viewing colour stereoscopic tv images.**

(57) A device for viewing colour stereoscopic TV programme adapted to normal TV receiver. Images to be observed by the viewer's left and right eyes respectively are shown on the upper and lower portion of the screen , the upper image will be seen by the viewer's one eye through a vertical polarizing filter of the screen polarizing sheet and a vertical polarizing lens of the the eyeglasses , while the lower image will be seen by the other eye through a horizontal polarizing filter , a pair of mirrors parallelly mounted in an adjustable manner and a horizontal polarizing lens. The left and right images will be merged into a three-dementional picture and perceived by the viewer by adjusting the angle between the two mirrors.

FIG. 3 .

## Device For Viewing Colour Stereoscopic TV Images

Background of the Invention

The present invention relates to a device for viewing colour steroeoscopic TV programme adapted to the standard colur TV receiver. The device comprises a pair of stereoscopic eyeglasses and a screen polarizing sheet. There are various 3-D TV system in prior art , one example is the stereoscopic video disc system , developed by JVC Co. and SHARP Co. in 1985 , wherein the sequential images shown on the screen are observed by the viewer's left and right eyes alternatively through a pair of liquid crystal light-valve eyeglasses drive by an apparatus synchronized with the sequential images. however , such a system is quite expensive. Another example is the 2-way stereoscopic TV system , developed by the Automation Dept. of Shanghai Industrial University in 1982 , wherein two images picked up by two spaced video cameras like two eyes of a humanbeing are sent into two TV monitors simultanously for display , than the viewer's left and right eyes observe respectively the corresponding images shown on the screens through special eyeglasses , and these two images will be merged into a 3-D picture perceived by the viewer. Bescause there must be two montiors in such a system , it has disadvantages of the large distortion of the merged pictures , the higher cost and being unsuitable to the present TV system , so it can hardly be put into practice.

Summary of the Invention

The object of the present invention is to provide a device for viewing colour stereoscopic TV programme adapted to the standard TV receiver , it comprises a pair of stereoscopic eyeglasses and a screen polarizing sheet. The operation of the divice in the present invention is based upon the general principl of stereoscopy. Wherein two images , which correspond to the images observed by the viewer's left and right eyes respectively , are displayed simultaneously on two parts of the TV screen, which is divided into upper and lower , parts by a horizontal centre line. The viewer's left and right eyes observe the upper and lower images respectively through the screen polarizing sheet and the stereoscopic eyeglasses of this invention , and these upper and lower images are merged into a stereoscopic picture and perceived by the after a suitable adjustment. According to this invention , the screen polarizing sheet comprises two polarzing filters (a vertical polarizing filter and a horizontal polarizing filter ) , and a frame, wherein the two polarizing filters are connected together with their polarization axes perpendicular to each other and then mounted in front of the screen in such a manner that the boundary line between the two vertically arranged filters will be coincident with the horizontal centre line. of the screen. The stereoscopic eyeglasses of this invention comprise two (a vertical and a horizontal ) polarizing lens, two or four mirrors with silver coating parallelly mounted in front of (or behind ) the vertical (or horizontal) polarizing lens, a housing, a eyeglasses frame , a screw for adjusting the angle of the two mirrors , a rotatable plate and spring means. In another embodiment , the eyeglasses comprise two polarizing lenses , two ocular lens mounted in the eyeglasses frame , two objects lens mounted in front of and with their centres staggered to that of the ocular lens , and a axis pin whereby the relative positions between the object and ocular lens can be adjusted.

Detailed description of the invention

Deatailed description of the present invention will be given with reference to the accompany drawings.

Fig. 1 and 2 are diagrams for illustration of the screen polarizing sheet in this invention;

Fig. 3 shows a form of the stereoscopic eyeglasses according to this invention;

Fig. 4 is the side view of the eyeglasses shown in Fig.3;

Fig. 5 shows another form of the eyeglasses;

Fig. 6 is the said view of the eyeglasses shown in Fig.5;

Fig. 7 is the simplified drawing for illustration the principle of stereoscopy;

Fig. 8 and 9 show other forms of eyeglasses of this invention; and Fig. 10 shows a eyeglasses using a pair of prisms.

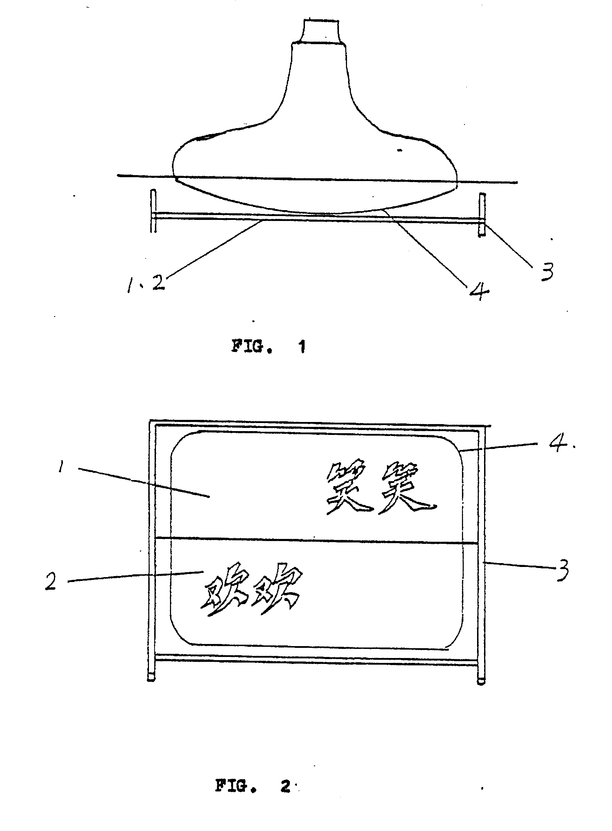

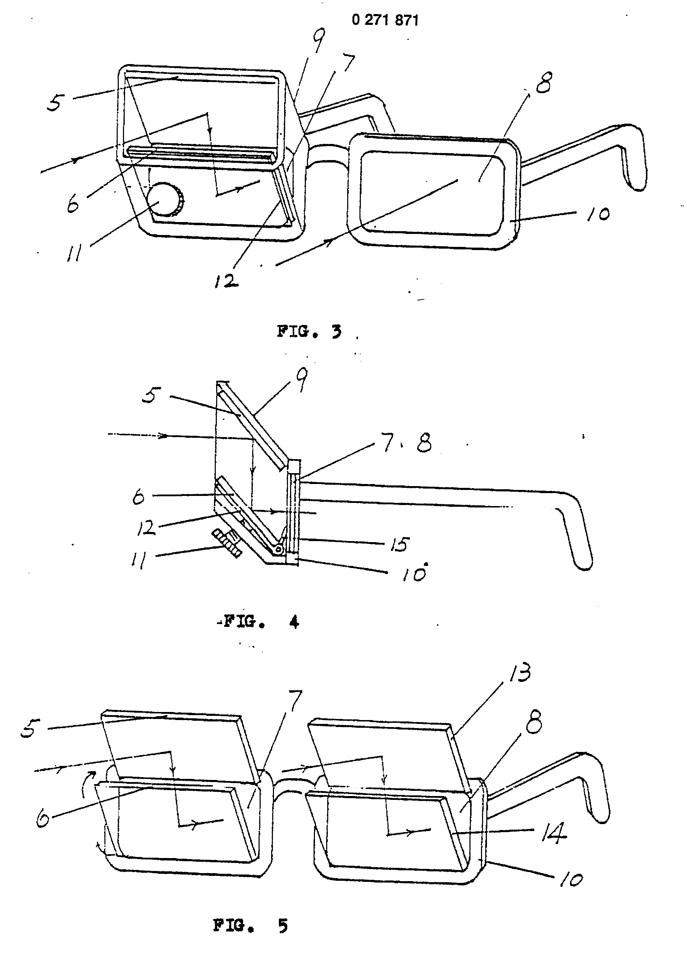

According to this invention , the colour stereoscopic TV programme includes an upper image and a lower image projected onto the screen with the horizontal centre line thereof as their boundary line , wherein the upper image will be seen by the viewer's right eye while the lower image by left eye , and vice-versa. The images are taken by a stereoscopic camera. The stereoscopic film can be used directly in a standard 35mm TV projecter in the same manner as the projection of the normal film when a stereoscopic movie is shown in colour stereoscopic TV programme. As the result , two images to be observed by the viewer's left and right eyes respectively can be projected on the TV screen, as can be seen in Fig.2. The upper and lower images take the horizontal centre line as their boundary , the upper are will be seen by right (or left ) eye while the lower are by left (or right )eye. For observing stereoscopic TV programme, the TV screen polarizing sheet is mounted in front of the screen in such a manner that the boundary between the vertical polarizing filter (1) and the horizontal polarzing filter (2 ) should be coincident with the horizontal centre line of the screen , so that the upper image will become vertically polarized after passing through the vertical polarizing filter (1 ), while the lower image passed through the horizontal polarizing filter (2 ) will become horizontally polarized . When a viewer observes the images through the eyeglasses shown in Fig.3 and Fig.4 , wherein a pair of mirrors are mounted parallelly in front of the vertical polarizing len (7), the lower image on the screen is observed by the viewer's left eye because the horizontally polarized image through the horizontal polarizing filter (2 ) has the same polarization with the horizontal polarizing lens (8), while the upper image on the screen becomes vertically polarized through the vertical polarizing filter ( 1 ) , so it can't be observed by the left eye for its polarzation perperndicular to that of the horizontal polarzing len (8 ). Similarly , the upper image on the screen becomes vertically polarized through the filter (1), then it can be observed by the right eye through the vertical polarizing len (7 ) after being reflected by the two mirrors (5), (6), while the lower image can't be observed by the right eye. In such a arrangement, the viewer left and right eyes can observe the upper and lower images , respectively. These two observed images are merged into a single picture and perceived by the viewer as stereoscopic through the adjustment of the screw (11 ) and the consequent variation of the angle between the two mirrors (5 ), (6), so a 3-D TV picture can be achieved, as shown in Fig. 7.

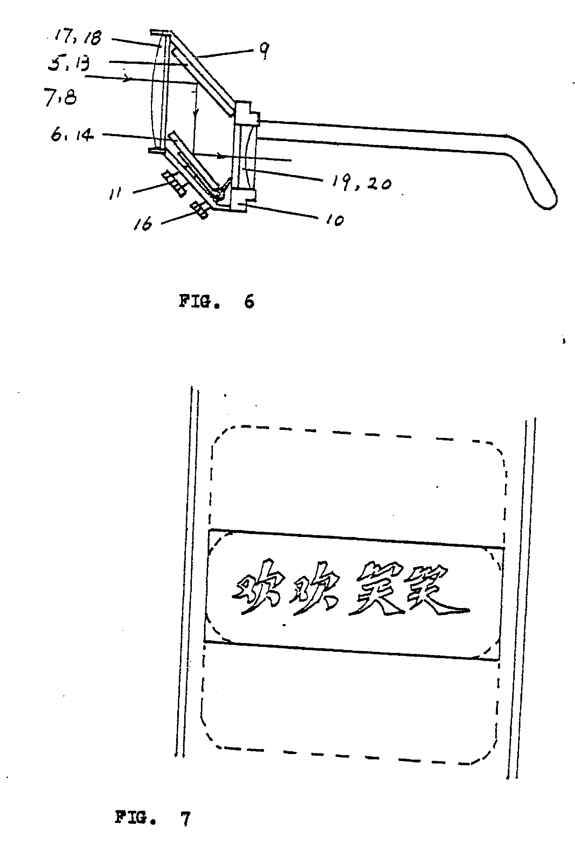

The eyeglasses shown in Fig.5 further include two mirrors(13), (14) mounted in front of the horizontal polarizing len (8 ) in such a manner that three of the four mirrors(5), (6), (13), (14) are fixed with suitable inclination while the remained one is adjustable. Furthermore , the openings of the two pairs of mirrors can be arranged below the eyeglasses frame , and said vertical polarizing len (7 ) and horigontal polariging len (8 ) can also be mounted in front of the mirrors (5), (6) and (13), (14).

An alternative form of eyeglasses shown in Fig.6 further include two objects (17 ), (18 ), and two oculars (19), (20)to enlarge the picture, the relative position of the images can be adjusted vertically by the screw (11 ), or horizontally by the screw(16).

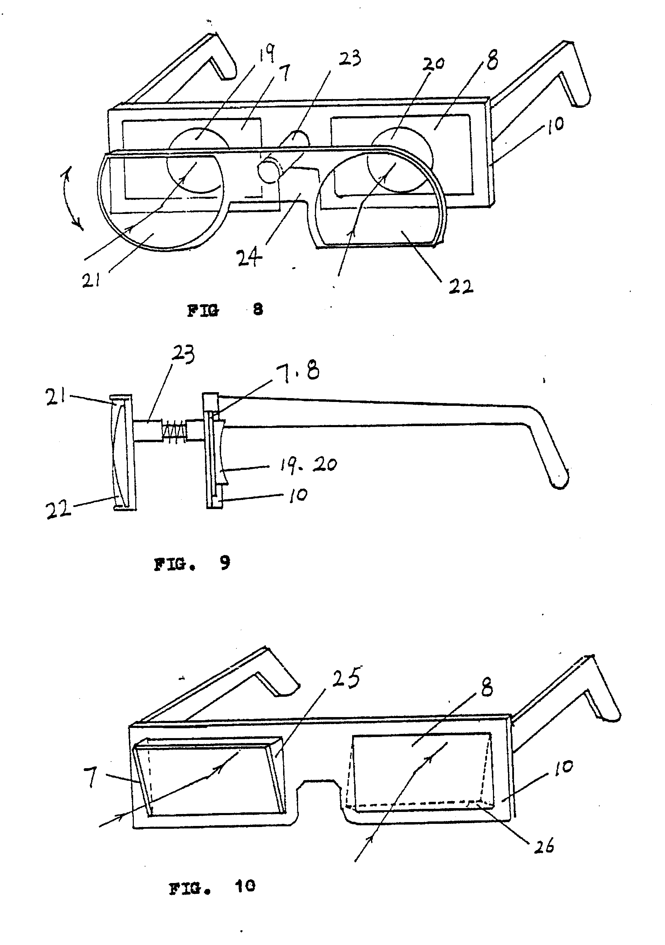

Fig. 8 and Fig.9 show another form of eyeglasses of this invention, wherein the vertical polarizing lens (7 ) and the horizontal polarizing lens (8 ) can be mounted either in front of the oculars (19 ), (20) or in front of the object ( 21 ) , ( 22 )in a manner that the centres of the objects are staggered with respect to the oculars (19 ) , (20), so that the light through the object ( 21 ) and the ocular (19 ) will be refracted to a different direction with respect to the light through the object (22 ) and ocular (20). In operation , the object frame (24 ) may be rotated around the axle pin (23 ) to cause variation of the relative positions between the objects and oculars , so the observed upper image and lower image may be merged into a single 3-D picture. The eyeglasses shown in Fig.8 and Fig.9 can also enlarge the picure shown on the screen.

Yet another form of eyeglasses shown in Fig.10 include a prism (25 ) which is mounted behind ( or in front of ) the vertical polarizing lens (7 ) , the horizontal polarizing lens (8 ) is mounted in another opening of the eyeglasses frame , or it can fruther include another prism (26 ) mounted in front of (or behind ) the lens (8 ). In such an arrangement , the two images can be merged into a single 3-D picture after a suitable adjustment.

The present invention have the advantages that the device is simple , easy-to use, inexpensive, and it has better 3-D effect. And the standard TV system can be used for the broadcasting of colour stereoscopic TV programme by using the stereoscopic eyeglasses and the TV screen polarizing sheet provided in this invention.

Example

In one prefered embodiment , the TV screen polarizing sheet has the structure shown in Figs.1 and 2, wherein the TV screen polarizing sheet should be close to the screen, and the boundary between the upper and lower polarizing filters should be coincident with the horizontal centre line of the screen. It is preferable that the vertical and horizontal polarizing filters (1 ) , (2) are inserted into two glass plates , or fixed by a transparent film or by some other convenient means. The TV screen polarzing sheet can also comprise two (an upper and a lower) polarizing filters with their polarization perpendicular to each other , and their polarization make an angle of 45° with vertical direction of the screen. Accordingly , the vertical and horizontal polarizing lenses of the eyeglasses should be arranged in similar manner.

In TV eyeglasses shown in Fig.3 and Fig.4 , the housing (9 ) may be a part of the frame (10), or may be fixed onto the frame; the mirror (5) is fixed on the housing (9 ) while the mirror (6 ) on the rotatable plate (12 ), the lower portion of rotatable plate is connectd to the housing by a pin ; one end of the spring contacts with the rotatable plate (12 ) while the other end contacts with the frame. The upper and lower images observed by the viewer's left and right eyes respectively can be merged into a single 3-D picture by adjusting the screw (11) to change the angle between two mirrors (5), (6). When a viewer observes the sterescopic TV programme through the eyeglasses shown in Fig.5 and Fig.6, the upper and lower images can be merged in vertical direction by adjusting , for example , mirror (6 ) of the four mirrors , and a further adjustment of the two images relative position in horizontal direction can be made by the screw (16). Total reflective prisms can be used instead of the mirrors in this invention.

The structure of the eyeglasses shown in Fig.8 and Fig.9 is that, the distance between the centres of two oculars (19 ), (20) should be the distance between the viewer's eyes , usually 6-6.5 cm, and the focal lengths of the objects and the oculars should be selectd properly according to the desired enlargement of the images. In operation , the two images can be merged by rotating the object frame around the axle pin (23 ) to change the relative positions between the objects(21), (22) and oculars (19), (20).

The eyeglasses shown in Fig.10 include a prism mounted on the frame , or two prisms mounted upon both openings of the frame , so the observed upper and lower images will be merged into a single 3-D TV picture and perceived by the viewer by a suitable adjustment.

## Claims

1. A device for viewing colour sterescopic TVprogramme adapted to the standard colour TV receiver, comprises a TV screen polarizing sheet and a pair of sterescopic eyeglasses.

2. A device of claim 1 , wherein said screen polarizing sheet comprises a vertical polarizing filter (1), a horizontal polarizing filter (2) and a frame (3), mounted in front of the screen with their polarization axes perpendicular to each other, and the filters are arranged vertically in symmetry.

3. A device of claim 1, wherein said screen polarizing sheet comprises two vertically arranged polarizing filters with their polarization axes perpendicular to each other , and the polarzation axes make an angle of 45° with vertical direction of the screen.

4. A device of claim 1, wherein said stereoscopic eyeglasses comprise a vertical polarizing lens (7 ) , a horizontal polarizing lens (8), two mirrors (5 ) , (6) mounted parallelly in front of the vertical polarizing lens(7), a housing (9), an eyeglasses frame (10), a screw (11) for adjusting the angle of the two mirrors, a rotatable plate (12), and spring means(15).

5. A device of claim 4 , wherein said eyeglasses further comprise another pair of mirrors (13 ) , (14 ) parallelly mounted in front of the horizontal polarizing lens (8 ) , with one of the mirrors (5 ) , (6 ) , (13), (14)being adjustable.

6. A device of claim 5, wherein the openings of the two pairs of mirrors (5), (6) and (13), (14) are arranged below the eyeglasses frame, the vertical polarizing lens (7) and horizonal polarizing lens (8) are mounted in front of the mirrors (5), (6) and (13), (14).

7. A device of claim 5 , wherein the eyeglasses further include tow objects (17), (18) mounted in front of the two pairs of mirrors, and two oculars (19), (20) mounted in the eyeglasses frame.

8. A device of claim 1 , wherein said eyeglasses comprise two oculars (19), (20), two objects (21), (22) which correspond to the oculars, a axle pin (23), a object frame ( 24 ) , a vertical polarizing lens (7 ) and a horizontal polarizing lens (8 ) mounted in front of (or behind ) the two objects, and a eyeglasses frame ; the relative positions between objects and oculars being adjustable by the rotation of the object frame (24).

9. A device of claim 1, wherein said stereoscopic eyeglasses comprise vertical polarizing lens (7), a prism (25) mounted in front of (or behind) the lens (7 ) , a horizontal polarizing lens (8 ) , a eyeglasses frame (10); and another prism (26 ) being mounted in front of (or behind ) the horizontal polarizing lens (8).

FIG. 1

FIG. 2

FIG. 3

FIG. 4

FIG. 5

17, 18

5, 13

7, 8

6, 14

11

16

9

19, 20

10

FIG. 6

FIG. 7

FIG 8

FIG. 9

FIG. 10